# EUROPÄISCHE PATENTSCHRIFT

(11) **EP 0 642 430 B1**
(45) Veröffentlichungstag und Bekanntmachung des Hinweises auf die Patenterteilung: **20.03.1996**
(21) Anmeldenummer: 93909963.6
(22) Anmeldetag: 12.05.1993
(51) Int. Cl.: B60R 16/08, B60R 17/00, F01M 1/02, F02B 63/06, F16D 48/02, B60K 25/02, B60T 8/40, B62D 5/06

(54) **VON EINEM VERBRENNUNGSMOTOR ANGETRIEBENE HYDRAULIKPUMPE**
HYDRAULIC PUMP DRIVEN BY AN INTERNAL COMBUSTION ENGINE
POMPE HYDRAULIQUE ENTRAINEE PAR UN MOTEUR A COMBUSTION INTERNE

(30) Priorität: 30.05.1992 DE 4217910
(43) Veröffentlichungstag der Anmeldung: 15.03.1995
(73) Patentinhaber: ITT Automotive Europe GmbH, D-60488 Frankfurt am Main (DE)
(72) Erfinder: KAHRS, Manfred, D-6200 Wiesbaden (DE); KUNZ, Gerhard, D-6307 Linden (DE)
(74) Vertreter: Portwich, Peter
(86) Internationale Anmeldenummer: EP9301175
(87) Internationale Veröffentlichungsnummer: WO9324346

(56) Entgegenhaltungen:
- DE-A- 2 219 468
- DE-A- 3 133 111
- DE-A- 3 516 710
- DE-A- 4 033 105
- FR-A- 590 493
- GB-A- 713 801
- GB-A- 2 057 613

## Beschreibung

Die Erfindung betrifft eine von einem Verbrennungsmotor angetriebene Hydraulikpumpe nach dem Oberbegriff des Anspruches 1.

Eine derartige Pumpe ist aus der DE-OS 40 33 105 bekannt. Dort wird eine innenbeaufschlagte Radialkolbenpumpe vorgeschlagen, die an das Motorgehäuse angeflanscht wird, zwischen Pumpe und Motorgehäuse eine Stauscheibe aufweist, die mit einer zentralen Öffnung versehen ist, durch welche eine den Pumpenmotor und die Antriebswelle des Motors verbindende Kupplung hindurchgreift.

Ein Nachteil dieser bekannten Lösung ist es, daß eine Vielzahl von Bauteilen benötigt werden und daß die Pumpe einen relativ großen Bauraum in Anspruch nimmt. Insbesondere bei modernen Kraftfahrzeugen trachtet man danach, die Abmessungen der unter der Motorhaube unterzubringenden Aggregate möglichst klein zu halten.

Aufgabe der Erfindung ist es daher, eine gattungsgemäße Hydraulikpumpe vorzuschlagen, die mit einer geringeren Anzahl von Bauteilen auskommt, leichter zu montieren ist und zudem einen geringen Bauraum benötigt. Gelöst wird diese Aufgabe durch die im kennzeichenden Teil des Anspruchs 1 angegebenen Maßnahmen. Die Ausführung der Hydraulikpumpe als von innen angetriebener, z.B. exzentergetriebener Radialkolbenpumpe ist kostengünstig da sie es erlaubt, mit einer geringen Anzahl von Bauteilen auszukommen, was den Montageaufwand reduziert. Zudem besteht die Möglichkeit, kostengünstige Pumpenelemente aus vorhandenen Serien zu verwenden. Des weiteren kann eine außenbeaufschlagte Pumpe in axialer Richtung kurz ausgebildet werden. Ihre radiale Ausdehnung hängt von der Anzahl und der Größe der verwendeten Pumpenkolben ab, beides kann dem geforderten Druckmittelbedarf angepaßt werden. Die Anbringung der Kolben kann den Platzerfordernissen angepaßt werden, insbesondere bei der Verwendung nur eines Kolbens. Die Integration der Pumpe in den Zylinderkopf des Verbrennungsmotors spart im Vergleich zu einem angeflanschten Bauteil Baulänge ein. Der Zylinderkopf kann mit zweckmäßig vorgegossenen Butzen und Kammern ausgeführt werden, die in wenigen zusätzlichen Bearbeitungsschritten auf den Einbau der Pumpenelemente vorbereitet werden können. Diese Bearbeitungsschritte bestehen im wesentlichen darin, Bohrungen anzubringen.

Als erfindungswesentlich hat sich herausgestellt, eine der bzw. die Nockenwelle des Verbrennungsmotors als Antriebswelle zu nutzen. Dabei kann als Pumpenantrieb ein in die Nockenwelle eingearbeiteter, Exzenter oder ein Nocken, eventuell ein Ventilnocken dienen. Da der zum Pumpenantrieb dienenden Exzenter bzw. Nocken an einer beliebigen Stelle der Nockenwelle angebracht werden kann, ist es möglich, die Pumpe an einer frei wählbaren, besonders geeigneten Position des Zylinderkopfes anzuordnen.

Nach Anspruch 2 ist als Pumpenantrieb ein freies Ende einer Nockenwelle des Verbennungsmotors vorgesehen, das entsprechend verlängert und zum Antrieb der Pumpe gestaltet sein muß.

Nach Anspruch 3 ist vorgesehen, das Ende der Nockenwelle mit einem Exzenter zu versehen, auf dem ein Laufring drehbar angeordnet ist, wobei sich der oder die Pumpenkolben auf dem Laufring abstützen. Der Exzenter kann darin bestehen, daß die Nockenwelle einen exzentrisch ausgebildeten Abschnitt aufweist. Kostengünstiger kann es sein, das Nockenwellenende so auszubilden, daß ein exzentrisches Bauteil daran angebracht werden kann. So kann die Grenzfläche zwischen Nockenwellenende und Exzenter z.B. als verzahnte Kegelstumpffläche ausgebildet sein, die sowohl eine einfache Montage als auch eine drehfeste Verbindung ermöglicht. Bei entsprechender Lagerung der Nockenwelle kann die Exzenterfläche natürlich auch in diese eingearbeitet sein. Der drehbare Laufring kann auf dem Exzenter gleit- oder nadelgelagert sein.

Die in Anspruch 4 vorgesehene Lagerung der Nockenwelle im Zylinderkopf kann Kräfte abfangen, die von der Pumpe auf die Nockenwelle ausgeübt werden. Damit ist eine Beeinträchtigung der Funktion der Nockenwelle ausgeschlossen.

Eine nochmals verkürzte Baulänge der Pumpe und damit des Verbrennungsmotorgehäuses, ist erreichbar, wenn nach Anspruch 5 im Zylinderkopf Lagerungen der Nockenwelle vorgesehen sind, die in der Lage sind, die von der Pumpe auf die Nockenwelle ausgeübten Kräfte aufzunehmen. Der zwischen Motorraum und Pumpenraum liegende Bereich des Zylinderkopfes kann dann nämlich sehr dünn ausgebildet werden.

In Anspruch 6 ist eine bevorzugte Ausführungsform der erfindungsgemäßen Hydraulikpumpe beschrieben, die besonders einfach herzustellen ist.

Der Abschluß des Pumpenraums nach außen durch einen Deckel nach Anspruch 7 ermöglicht eine problemlose Montage der Pumpe.

In Anspruch 8 wird vorgeschlagen, einen Teil des Saugkanals der Pumpe im Deckel auszuführen, und in dem Deckel Drosselblenden vorzusehen. Dies hat zum einen den Vorteil, daß der Deckel unabhängig vom Zylinderkopf bearbeitet, und vorgefertigt zur Montage geliefert werden kann. Zum anderen ist es durch die Drosselblende möglich, die Pumpe im Saugdrosselbetrieb laufen zu lassen. Dies bedeutet, daß nicht mehr als der maximal benötigte Volumenstrom gefördert wird, auch wenn die Nockenwelle mit einer höheren Drehzahl läuft als für den maximalen Volumenstrom nötig wäre. Die Saugdrosselung spart somit Energie ein.

Als besonders günstig hat es sich herausgestellt, den Deckel nach Anspruch 9 im Einfaßbereich rund auszuführen und mit einer umlaufenden Ringnut zu versehen, die die eine Begrenzung eines Saugkanals bildet, während die andere Begrenzung vom Zylinderkopf gebildet wird. Die Bohrungen von der umlaufenden Ringnut zu dem Zylinderkopf zugewandten Seite des Deckel stellen die Drosselblenden dar, durch die Pumpenkolben das Druckmittel ansaugen können. Die in der Mitte des Deckel vorgesehene Ausnehmung kann dazu dienen, Befestigungsmittel zur Befestigung des Exzenter einer Nockenwelle aufzunehmen.

In Anspruch 10 wird vorgeschlagen, auch das Zwischenreservoir in der Zylinderkopfwand auszubilden. Man kann dann das Zwischenreservoir mittels eines Lochs zum Ringkanal des Deckels hin auf einfache Art und Weise ausbilden.

Als Druckmittel ist das Schmieröl des Verbennungsmotors vorgesehen, das mittels der Schmierölpumpe ins Zwischenservoir gefördert wird. Dies hat den Vorteil, daß Leckage von der Pumpe zum Motorraum hin toleriert werden kann, daß kein zusätzliches, eigenständiges Druckmittel verwendet werden muß und daß eine Rückleitung von dem oder den Verbrauchern in die Schmierölwanne des Verbernnungsmotors erfolgen kann.

In Anspruch 11 sind Anwendungsfälle angegeben, für die die erfindungsgemäße Hydraulikpumpe besonders geeignet ist. Es handelt sich hier jeweils um Verbraucher, die in der Nähe des Verbrennungsmotors angeordnet sind und mit Druckmittel versorgt werden müssen.

Besonders geeignet ist die erfindungsgemäße Pumpe zur Druckmittelversorgung einer Nockenwellenverstellung, da die Nockenwellenverstelleinrichtung ebenfalls unmittelbar am Zylinderkopf des Verbrennungsmotors angebracht sein kann. Es sind dabei verschiedene Ausführungen möglich. Besonders kurze Druckmittelführungen werden benötigt, wenn Nockenwellenverstelleinrichtung und Hydraulikpumpe an derselben Seite des Motorblocks an Einlaß- bzw. Auslaßnockenwelle angebracht sind. Diese können, entsprechend der jeweiligen Motorkonstruktion, als eingegossene bzw. gebohrte Kanäle oder auch - eventuell teilweise - als verschraubte Rohrleitungen ausgeführt werden.

Die Möglichkeit mehrere Nockenwellen unabhängig voneinander zu verstellen, besteht dann, wenn man Nockenwellenverstelleinrichtung und Hydraulikpumpe an den entgegengesetzten Enden einer Nockenwelle anbringt und, wenn gewünscht, weitere Nockenwellen des Verbrennungsmotors mit Nockenwellenverstelleinrichtungen ausrüsten kann. Eine Verstellung auch der die Hydraulikpumpe antreibenden Nockenwellen ist somit möglich.

Weitere Merkmale der Erfindung und ihre Funktionsweise ergeben sich anhand der Abbildungen. Es zeigen dabei
- Fig. 1: als ein Ausführungsbeispiel den Schaltplan einer Hydraulikanlage, z.B. variable Nockenwellenverstellung, mit erfindungsgemäße Hydraulikpumpe und
- Fig. 2: einen Schnitt durch die erfindungsgemäße Hydraulikpumpe.

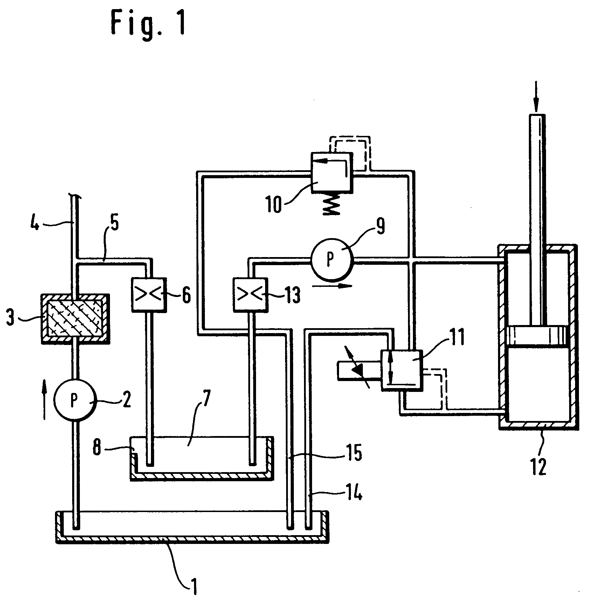

Fig. 1 zeigt einen Teil des Schmierkreislaufs eines Verbrennungsmotors mit einer Schmiermittelwanne 1 eine Schmierdruckpumpe 2, einem Filter 3 und einer Schmierdruckleitung 4. Von der Schmierdruckleitung 4 zweigt eine Förderleitung 5 mit einer Drosselblende 6 ab, die in ein Zwischenreservoir 7 mit einem Überlauf 8 mündet. Das Zwischenreservoir 7 ist Teil einer Hydraulikanlage, die eine sauggeregelte Hydraulikpumpe 9 ein Druckbegrenzungsventil 10, ein elektromagnetisch betätigbares Steuerventil 11 und einen Stellzylinder 12 umfaßt. Der Stellzylinder 12 kann zur Betätigung einer hier nicht dargestellten variablen Nockenwellenvrstellung dienen. Die Saugseite der Hydraulikpumpe 9 ist über eine Drosselblende 13 zur Saugregelung der Fördermenge an das Zwischenreservoir 7 angeschlossen. Die Druckseite der Hydraulikpumpe 9 steht unmittelbar mit der Kolbenstangenseite des Stellzylinders 12 in Verbindung. Zur Ausführung von Stellbewegungen wird die kolbenstangenfreie Seite des Stellzylinder 12 durch das Steuerventil 11 entweder mit der Druckseite der Hydraulikpumpe 9 oder über eine Rücklaufleitung 14 mit der Schmiermittelwanne 1 verbunden. In einer Zwischenstellung ist das Steuerventil 11 gesperrt und der Kolben des Stellzylinders 12 wird in der jeweils erreichten Stellung der Druckbeaufschlagung aufgehalten. Vom Druckbegrenzungsventil 10 führt ebenfalls eine Rücklaufleitung 15 zur Schmiermittelwanne 1. Mit der beschriebenen hydraulischen Anlage läßt sich der Schmierkreislauf eines Verbrennungsmotors trotz seiner durch die Motordrehzahl und die Betriebstemperatur erheblichen Schwankungen des Betriebsdrucks vorteilhaft nutzen, um eine vom Verbrennungsmotor angetriebene Hydraulikpumpe 9 mit Betriebsmittel zu versorgen. Das drucklose Zwischenreservoir ermöglicht eine Saugdruckregelung der Hydraulikpumpe 9, so daß die Fördermenge der Hydraulikpumpe 9 auf einfache und verlustarme Weise trotz großer Drehzahlschwankungen des Pumpenantriebs auf einen geeigneten Maximalwert begrenzt werden kann.

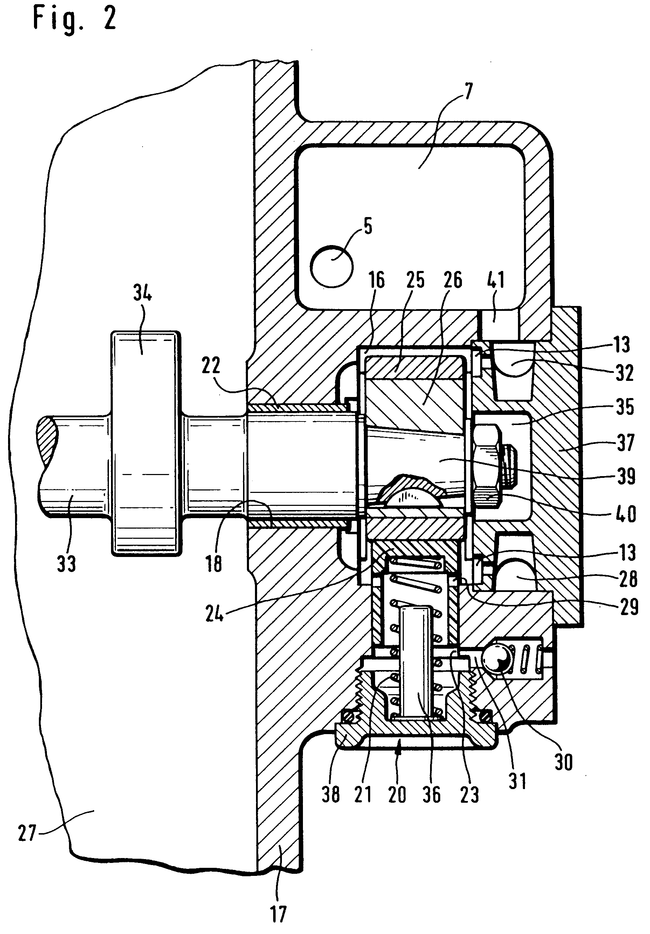

In Fig. 2 ist eine Ausführungsform der erfindungsgemäßen Hydraulikpumpe 9 abgebildet.

Links befindet sich der Zylinderkopf 27, dessen rechte Begrenzung die Zylinderkopfwand 17 bildet. In der Zylinder kopfwand 17 befindet sich eine Öffnung 18, in der die Nockenwelle 33 mittels eines Lagers 22 gelagert ist. Am rechten Ende der Nockenwelle 33 ist ein konischer Abschnitt 39 angebracht, der verzahnt ist und auf dem ein ebenfalls verzahnter Exzenter 26 sitzt. Durch die Verzahnung ist eine drehfeste Verbindung von Exzenter 26 und konischem Abschnitt 39 der Nockenwelle 33 gewährleistet. Gegen eine axiale Verschiebung ist der Exzenter 26 mittels einer auf dem Ende der Nockenwelle 33 angebrachten Befestigungsschraube 40 gesichert. Auf dem Exzenter 26 ist ein Laufring 25 drehbar gelagert.

In der Zylinderkopfwand 17 befindet sich das Zwischenreservoir 7, in das die Förderleitung 5 von der Schmierdruckpumpe 2 mündet und daß einen, hier nicht dargestellten Überlauf 8 aufweist. Der vom Zwischenreservoir 7 ausgehende Kanal 41 bildet einen Teil des Saugkanals 28, der sich in einer umlaufenden Ringnut 32 im Deckel 37 fortsetzt. Der Deckel 37 begrenzt den in der Zylinderkopfwand 17 befindlichen Hohlraum 16 nach außen hin und weist nach innen eine Ausnehmung 35 auf, in der sich die Befestigungsschraube 40 befindet, sowie als Drosselblenden 13 dienende Bohrungen zwischen Ringnut 32 und Hohlraum 16.

Ebenfalls in der Zylinderkopfwand 17 befindet sich eine Zylinderbohrung 23, in der ein Kolben 24 geführt wird, der sich einerseits auf dem Laufring 25 abstützt und andererseits von einer Feder 21 auf diesen gedrückt wird. Der Kolben 24 ist einseitig im Bild nach unten offen und weist Ansaugbohrungen 29 mit Drosselwirkung auf, die in der im Bild obersten möglichen Stellung des Kolbens 24 mit dem Hohlraum 16 in Verbindung stehen.

Die Feder 21 wird durch eine Führung 36 geführt und stützt sich auf dem Befestigungselement 38 ab. Vom Innenraum des Kolbens 24 besteht eine Verbindung zum Druckkanal 31, in dem sich ein Rückschlagventil 30 befindet und der durch die Zylinderkopfwand 17 nach außen führt.

### Funktion:

Das von der Schmierdruckpumpe 2 des Verbrennungsmotors ins Zwischenreservoir 7 geförderte Druckmittel gelangt über den Saugkanal 28, der aus Kanal 41 und Ringnut 32 besteht, an die Drosselblenden 13, die nur einen geminderten Volumenstrom passieren lassen. Durch die Drosselblenden 13 gelangt das Druckmittel in den Hohlraum 16. Durch die Drehung der Nockenwelle 33 wird über den Exzenter 26 und dem Laufring 25 der Kolben 24 in eine Auf- und Ab-Bewegung versetzt, die Feder 21 ist so ausgelegt, daß sie ein Abheben des Kolbens 24 vom Laufring 25 verhindert.

Befindet sich der Kolben 24 in der Ansaugposition, seine im Bild oberste Stellung, wird Druckmittel aus dem Hohlraum 16 durch die Ansaugbohrung 29 in den Innenraum des Kolbens 24 gesaugt. Bei der Abwärtsbewegung des Kolbens 24 werden die Ansaugbohrungen 29 mit Drosselwirkung aus dem Bereich des Hohlraums 16 bewegt und von der Zylinderbohrung 23 verschlossen, so daß das Druckmittel in den Druckkanal 31 gepumpt wird. Bei der anschließenden Aufwärtsbewegung des Kolben 24 verhindert das Rückschlagventil 30 ein Zurückfließen des Druckmittels und verhindert damit einen Druckabfall zum Verbraucher hin. Es kommt dazu, daß ein Unterdruck im Innenraum des Kolben 24 entsteht, was dazu führt, daß das im Hohlraum 16 befindliche Druckmittel in den Innenraum des Kolbens 24 eingesaugt wird, sobald die Ansaugbohrung 29 wieder im Kontakt zum Hohlraum 16 steht.

### Bezugszeichen

- 1: Schmiermittelwanne
- 2: Schmierdruckpumpe
- 3: Filter
- 4: Schmierdruckleitung
- 5: Förderleitung
- 6: Drosselblende
- 7: Zwischenreservoir
- 8: Überlauf
- 9: Hydraulikpumpe
- 10: Druckbegrenzungsventil
- 11: Steuerventil
- 12: Stellzylinder
- 13: Drosselblende
- 14: Rücklaufleitung
- 15: Rücklaufleitung
- 16: Hohlraum
- 17: Zylinderkopfwand
- 18: Öffnung
- 19: -
- 20: Pumpenelement
- 21: Feder
- 22: Lager
- 23: Zylinder
- 24: Kolben
- 25: Laufring
- 26: Exzenter
- 27: Zylinderkopf
- 28: Saugknal
- 29: Ansaugbohrung
- 30: Rücklschlagventil
- 31: Druckkanal
- 32: Ringnut
- 33: Nockenwelle
- 34: Nocken
- 35: Ausnehmung
- 36: Führung
- 37: Deckel
- 38: Befestigungselement
- 39: konischer Abschnitt
- 40: Befestigung
- 41: Kanal

## Patentansprüche

1. Hydraulikanlage mit einer von einer Nockenwelle eines Verbrennungsmotors angetriebenen Hydraulikpumpe (9) zur Versorgung motornaher Verbraucher in Kraftfahrzeugen, wobei die Saugseite der Hydraulikpumpe (9) an ein Zwischenreservoir (7) mit freiem Überlauf (8) angeschlossen ist, in das von einer Schmierdruckpumpe (2) des Verbrennungsmotors Betriebsmedium aus dem Schmierkreislauf gefördert wird, dadurch **gekennzeichnet,** daß die Hydraulikpumpe (9) eine außenbeaufschlagte und von innen von der im Zylinderkopf (27) liegenden Nockenwelle angetriebene Radialkolbenpumpe mit mindestens einem Pumpenkolben (24) ist, wobei der Zylinderkopf (27) des Verbrennungsmotors als Pumpengehäuse ausgebildet ist.

2. Hydraulikanlage nach Anspruch 1, dadurch **gekennzeichnet**, daß die Radialkolbenpumpe durch ein speziell gestaltetes freies Ende der Nockenwelle (33) angetrieben wird.

3. Hydraulikanlage nach Anspruch 2, dadurch **gekennzeichnet**, daß das freie Ende der Nockenwelle (33) mit einem Exzenter (26) versehen ist, auf dem ein Laufring (25) drehbar angeordnet ist, wobei sich auf dem Laufring (25) der oder die Pumpenkolben (24) abstützen.

4. Hydraulikanlage nach einem der Ansprüche 1 bis 3, dadurch **gekennzeichnet**, daß die Nockenwelle (33) in der Zylinderkopfwand (17) in einem Lager (22) gelagert ist.

5. Hydraulikanlage nach einem der Ansprüche 1 bis 3, dadurch **gekennzeichnet**, daß die Nockenwelle (33) im Zylinderkopf (27) gelagert ist und diese Lagerung Kräfte aufnimmt, die von der Hydraulikpumpe auf die Nockenwelle ausgeübt werden.

6. Hydraulikanlage wenigstens nach Anspruch 3, dadurch **gekennzeichnet**, daß in der Zylinderkopfwand (17) eine Öffnung (18) zum Zylinderkopf (27) vorhanden ist, durch die das freie Ende der Nockenwelle (33) ragt, daß sich an dieser Öffnung (18) ein Hohlraum (16) anschließt, in dem sich Laufring (25) und Exzenter (26) befinden, daß sich in der Zylinderkopfwand (17) mindestens eine Zylinderbohrung (23) befindet, in der oder denen je ein Kolben (24) geführt ist, daß ein Saugkanal (28) und ein Druckkanal (31) durch die Zylinderkopfwand (17) geführt sind.

7. Hydraulikanlage nach Anspruch 6, dadurch **gekennzeichnet**, daß der Hohlraum (16) durch einen Deckel (37) abgeschlossen ist.

8. Hydraulikanlage nach Anspruch 7, dadurch **gekennzeichnet**, daß im Deckel (37) ein Teil des Saugkanals (28) ausgebildet ist und daß im Deckel (37) Drosselblenden (13) vorhanden sind.

9. Hydraulikanlage nach Anspruch 8, dadurch **gekennzeichnet**, daß der Deckel (37) im Einfaßbereich rund ist, daß er eine umlaufenden Ringnut (32) aufweist, daß mindestens eine Bohrung von der Zylinderkopfwand (17) zugewandten Seite des Deckels zu der umlaufenden Ringnut (32) vorhanden ist, daß in der Mitte der dem Zylinderkopf zugewandten Seite des Deckels (37) eine Ausnehmung (35) vorhanden ist.

10. Hydraulikanlage nach einem der vorhergehenden Ansprüche, dadurch **gekennzeichnet**, daß das Zwischenreservoir (7) in der Zylinderkopfwand (17) untergebracht ist.

11. Hydraulikanlage nach einem der vorhergehenden Ansprüche, dadurch **gekennzeichnet**, daß die Hydraulikpumpe (9) zur Versorgung einer Nockenwellenverstelleinrichtung, eines Kupplungsautomaten, einer Differentialsperre, einer Schlupfregelung oder eine Lenkhilfe oder gleichzeitig mehrerer derartiger Verbraucher dient.

## Claims

1. A hydraulic unit including a hydraulic pump (9), driven by a camshaft of an internal combustion engine, for the supply of engine-compartment consumers in automotive vehicles, the suction side of the hydraulic pump (9) being connected to an intermediate reservoir (7) with an unrestricted overflow tank (8), into which operating medium from the lubrication system is supplied by the lubrication pressure pump (2) of the internal combustion engine,
characterized in that the hydraulic pump (9) is an externally pressurized radial piston pump that is internally driven by the camshaft accommodated in the cylinder head (27) and includes at least one pump piston (24), the cylinder head (27) of the internal combustion engine being formed as pump housing.

2. A hydraulic unit as claimed in claim 1,
characterized in that the radial piston pump is driven by a specially configured free end of the camshaft (33).

3. A hydraulic unit as claimed in claim 2,
characterized in that the free end of the camshaft (33) is provided with an eccentric (26) on which a ball race (25) is rotatably mounted, the pump piston(s) (24) being supported on the ball race (25).

4. A hydraulic unit as claimed in anyone of the claims 1 to 3,
characterized in that the camshaft (33) is mounted in a bearing (22) in the cylinder head wall (17).

5. A hydraulic unit as claimed in anyone of the claims 1 to 3,
characterized in that the camshaft (33) is mounted in the cylinder head (27), and the mounting support takes up forces which are exerted on the camshaft by the hydraulic pump.

6. A hydraulic unit as claimed in claim 3,
characterized in that an opening (18) leading to the cylinder head (27) is provided in the cylinder head wall (17), through which the free end of the camshaft (33) extends, in that the opening (18) is succeeded by a hollow space (16) accommodating the ball race (25) and the eccentric (26), in that the cylinder head wall (17) contains at least one cylinder bore (23) in which each one piston (24) is guided, and in that a suction channel (28) and a pressure channel (31) extend through the cylinder head wall (17).

7. A hydraulic unit as claimed in claim 6,
characterized in that the hollow space (16) is closed by a cover (37).

8. A hydraulic unit as claimed in claim 7,
characterized in that part of the suction channel (28) is provided in the cover (37), and in that restrictors (13) are provided in the cover (37).

9. A hydraulic unit as claimed in claim 8,
characterized in that the cover (37) is of round shape in its fringe area, that it includes a circumferential annular groove (32), in that at least one bore extends from the side of the cover close to the cylinder head wall (17) to the circumferential annular groove (32), and in that a recess (35) is provided in the middle of the side of the cover (37) close to the cylinder head.

10. A hydraulic unit as claimed in anyone of the preceding claims,
characterized in that the intermediate reservoir (7) is incorporated in the cylinder head wall (17).

11. A hydraulic unit as claimed in anyone of the preceding claims,
characterized in that the hydraulic pump (9) serves for the supply of either a camshaft adjusting device, an automatic clutch, a differential lock, a slip control system or a power steering system, or even a plurality of such consumers at the same time.

## Revendications

1. Système hydraulique avec une pompe hydraulique (9) actionnée par un arbre à cames d'un moteur à combustion interne pour alimenter des consommateurs au voisinage du moteur prévus dans des automobiles, la côté d'aspiration de la pompe hydraulique (9) étant reliée à un réservoir intermédiaire (7) avec trop-plein (8) libre dans lequel est refoulé agent moteur du circuit de graissage par la pompe pression à graisse (2) du moteur à combustion interne, caractérisé en ce que la pompe hydraulique (9) est une pompe à pistons radiaux alimentée par l'extérieur et actionné par l'intérieur au moyen de l'arbre à cames disposé dans la tête cylindre (27), la pompe à pistons radiaux comportant au moins un piston plongeur (24) et la tête cylindre (27) du moteur à combustion interne étant formé comme corps de pompe.

2. Système hydraulique selon la revendication 1, caractérisé en ce que la pompe à pistons radiaux est actionnée par une extrémité libre de l'arbre à cames (33) d'une façon spéciale.

3. Système hydraulique selon la revendication 2, caractérisé en ce que l'extrémité libre de l'arbre à cames (33) est prévue d'un excentrique (26) sur lequel est prévu de manière pivotante un anneau à billes (25), le/les piston(s) de pompe (24) s'appuyant sur l'anneau à billes (25).

4. Système hydraulique selon l'une des revendications 1 à 3, caractérisé en ce que l'arbre à cames (33) est disposé dans la paroi de la tête cylindre (17) dans un palier (22).

5. Système hydraulique selon l'une des revendications 1 à 3, caractérisé en ce que l'arbre à cames (33) est disposé dans la tête cylindre (27), ce palier accueillant des forces exercées sur l'arbre à cames par la pompe hydraulique.

6. Système hydraulique au moins selon la revendication 3, caractérisé en ce qu'une ouverture (18) vers la tête cylindre (27) est prévue dans la paroi (17) de tête cylindre, l'ouverture étant traversée par l'extrémité libre de l'arbre à cames (33) se faisant saillie au travers de l'ouverture, qu'une cavité (16) se joint à cette ouverture (18) dans laquelle se trouvent an anneau à billes (25) et un excentrique (26), qu'au moins un alésage de cylindre (23) se trouve dans la paroi (17) de tête cylindre dans lequel/lesquels chaque fois est guidé un piston (24), qu'»ne orifice d'aspiration (28) et une orifice pression (31) sont guidées à travers la paroi (17) de tête cylindre.

7. Système hydraulique selon la revendication 6, caractérisé en ce que la cavité (16) est fermée par un couvercle (37).

8. Système hydraulique selon la revendication 7, caractérisé en ce qu'une partie de l'orifice d'aspiration (28) est formée dans le couvercle (37) et que des écrans étrangleurs (13) sont prévus dans le couvercle (37).

9. Système hydraulique selon la revendication 8, caractérisé en ce que le couvercle (37) dans la region de cadre est d'une configuration circulaire, qu'il comporte une rainure annulaire (32) circonférentielle, qu'au moins un alésage est prévu dès la côté du couvercle adjacent la paroi de tête cylindre (17) à la rainure annulaire (32) circonférentielle, qu'une rainure (35) est prévue au centre de la côté du couvercle (37) adjacent la tête cylindre.

10. Système hydraulique selon l'une quelconque des revendications, caractérisé en ce que le réservoir intermédiaire (7) est logé dans la paroi (17) de tête cylindre.

11. Système hydraulique selon l'une qelconque des revendications, caractérisé en ce que la pompe hydraulique (9) sert à alimenter un régleur de l'arbre à cames, un accouplement automatique, un verrouillage du différentiel, une commande par glissement ou une aide de direction ou en même temps plusieurs de consommateurs de ce genre.
